# EUROPEAN PATENT SPECIFICATION

(11) **EP 3 855 056 B1**
(45) Date of publication and mention of the grant of the patent: **19.07.2023**
(21) Application number: 19863101.2
(22) Date of filing: 13.09.2019
(51) Int. Cl.: F16L 11/08, F16L 11/12

(54) **HEAT-RESISTANT FLEXIBLE PIPE**
WÄRMEBESTÄNDIGES FLEXIBLES ROHR
TUYAU FLEXIBLE RÉSISTANT À LA CHALEUR

(30) Priority: 21.09.2018 JP 2018177370
(43) Date of publication of application: 28.07.2021
(73) Proprietor: Toyox Co., Ltd., Kurobe-shi Toyama 938-8585 (JP)
(72) Inventor: TOKUNO Shinichi, Kurobe-shi, Toyama 938-8585 (JP); YONEDA Kazuya, Kurobe-shi, Toyama 938-8585 (JP)
(74) Representative: Perani & Partners S.p.A.
(86) International application number: PCT/JP2019/036145
(87) International publication number: WO 2020/059665

(56) References cited:
- WO-A1-2013/073433
- DE-U1-202004 002 630
- JP-A- 2001 012 659
- JP-A- 2009 190 265
- US-A1- 2008 035 228
- US-A1- 2008 035 228

## Description

### [Technical Field]

The present invention relates to a heat resistant flexible hose having excellent pressure resistance, and the like, which is used in, for example, manufacturing factories for foods including beverages, cosmetics, fragrances, pharmaceuticals and others, and to a method for producing the heat resistant
flexible hose.

### [Background Art]

Conventionally, as this kind of heat resistant flexible hose, there is a tubular body that has an inner side layer made of a fluororesin and an outer side layer made of addition-polymerized silicone rubber, and is provided with a primer processing part processed with a silicone rubber primer on an outer side of the inner side layer, thereby achieving crosslinking adhesion between the inner side layer and the outer side layer to be integrated (see, for example, PTL 1).

In medical and food applications, fluororesins are used for the inner side layer (inner surface layer) due to the requirement for chemical resistance, and silicone rubber is used for the outer side layer (intermediate rubber layer) and the outermost layer (outer surface rubber layer) due to the requirements for flexibility and heat resistance.

Further, pressure resistance is imparted by interposing a fiber reinforcing layer made of polyester or aramid fiber between the intermediate rubber layer and the outer surface rubber layer. A primer processing part processed with a silicone rubber primer is also provided on a surface of the fiber reinforcing layer, and the intermediate rubber layer and the outer surface rubber layer are firmly cross-linked and adhered by crosslinking adhesion, thereby being integrated as w whole.

### [Citation List]

### [Patent Literature]

[PTL 1] Japanese Patent Application Laid-open No. 2001-012659

### [Summary of Invention]

### [Technical Problem]

Incidentally, factories for foods, cosmetics, fragrances, pharmaceuticals, and the like take strict measures against foreign substances mixed in products during the manufacturing process. Specifically, every time a fluid flowing in the inner hose changes for plural types of products, an inner hose surface is processed by hot water cleaning, steam cleaning, or chemical cleaning, thereby preventing the inner hose surface from being flavored, colored, and seasoned and prevents the flavor, color, taste or the like of a fluid before cleaning from being transferred to a fluid after cleaning.

Further, in the heat resistant flexible hose used in such factories, an end part of the hose is connected to a manufacturing apparatus via a hose joint, and most of the hose except the end part of the hose is piped in a bent state, and thus vibrations of the manufacturing apparatus are transmitted to the entire hose as they are. For this reason, it is necessary to select a material that is not only excellent in pressure resistance but also has durability against long-term bending and vibrations as a constituent material of the hose.

However, in PTL 1, the inner side layer made of fluororesin and the outer side layer made of silicone rubber are adhered by crosslinking adhesion using the silicone rubber primer, and thus when adhesive strength between the fluororesin and the silicone rubber deteriorates, various types of cleaning (hot water cleaning, steam cleaning, and chemical cleaning) accompanied by changing of fluids passing through the inner hose are repeated, and bending and vibration in the piping state are repeated, and thus the adhesive strength between the inner side layer and the outer side layer is sharply decreased. As a result, the inner side layer and the outer side layer cannot be continuously adhered for a long period of time, and pressure resistance performance and bending performance deteriorate, which causes a problem in durability.

As a result, there is a problem that a life span of the entire hose decreases and stable use cannot be performed for a long period of time, and thus an operating rate decrease due to frequent replacement of the entire hose.

Further, there is a problem that since a process of processing the outer side of the inner side layer with the silicone rubber primer is required before a process of adhering the inner side layer and the outer side layer, the number of processes increases and a structure of the manufacturing apparatus becomes complicated, and there are many problems, and thus costs of the primer and waste solvents are also required, which increases the costs.

In addition, for the fluororesin constituting the inner side layer, an ethylene-tetrafluoroethylene copolymer (ETFE) that has so excellent mechanical properties that can withstand repetition of various types of cleaning (hot water cleaning, steam cleaning and chemical cleaning), and repetition of bending or vibration in a piping state is preferably used. However, it is desirable that the crosslinking adhesion between the ETFE processed with the primer and the silicone rubber be processed by heating in a high temperature region of the melting point of ETFE of 270°C or higher since both materials have poor adhesiveness.

However, when a vulcanization temperature of the silicone rubber increases, polyester yarns of the fiber reinforcing layer are thermally deteriorated, which causes a problem that the pressure resistance performance is lowered.

In addition thereto, when the heating temperature increases, a low boiling point component contained in the silicone rubber is vaporized such that bubbles are generated in the outer side layer made of the silicone rubber. In a case in which these bubbles are generated at an interface between the outer side layer and the inner side layer made of fluororesin, they are not released to the outside air and remain as bubbles, and thus there is also a problem of causing a decrease in transparency of the entire hose.

### [Solution to Problem]

In order to solve the above problems, a heat resistant flexible hose according to the present invention is characterized by including: a plurality of heat resistant layers formed of silicone rubber as a main component; a reinforcing layer provided by winding a reinforcing wire between the plurality of heat resistant layers; and a barrier layer which is radially opposed to an inner layer part of the plurality of heat resistant layers made of heat resistant silicone rubber and is provided in contact with a fluid passing through an inner hose, the barrier layer uses a self-adhesive ethylene-tetrafluoroethylene copolymer having a melting point of 240°C or less and imparting an adhesive functional group, and forms a laminate with the inner layer part by extruding molding or coating molding and adheres thereto by crosslinking adhesion, a first reinforcing layer is in contact with the inner layer part which serves as the reinforcing layer, and is wound by reinforcing thread made of synthetic resin as the reinforcing wire, and the inner layer part uses a self- adhesive silicone rubber in which an adhesive component is contained in a silicone rubber component and forms a laminate along the opposite surface of the barrier layer by extruding molding or coating molding, and has inner peripheral surface adheres thereto by crosslinking adhesion as the opposite surface of the barrier layer by heating at a temperature higher than the melting point of the self-adhesive ethylene tetrafluoride copolymer.

In order to solve the above problems, a method for producing a heat resistant flexible hose according to the present invention is characterized by including: a first step of forming a tubular barrier layer by extruding molding or coating molding self-adhesive ethylene-tetrafluoroethylene copolymer having a melting point of 240 °C or less and imparting adhesive functional group, a second step of extruding molding or coating molding a self-adhesive silicone rubber in which an adhesive component is contained in a silicone rubber component in an unvulcanized state toward opposite surface of the barrier layer, and an inner layer part forms laminate along with the opposite surface of the barrier layer, a third step of heating the inner layer part to a temperature higher than the melting point of the self-adhesive ethylene-tetrafluoroethylene copolymer to crosslink and adhere the inner peripheral surface of the inner layer part with the opposite surface of the barrier layer, a fourth step of winding a reinforcing thread made of synthetic resin around the outside of the inner layer part as a reinforcing wire to form a first reinforcing layer, and a fifth step of laminating an addition reaction type silicone rubber on the outside of the first reinforcing layer to form a heat-resistant layer.

### [Brief Description of Drawings]

[Fig. 1]

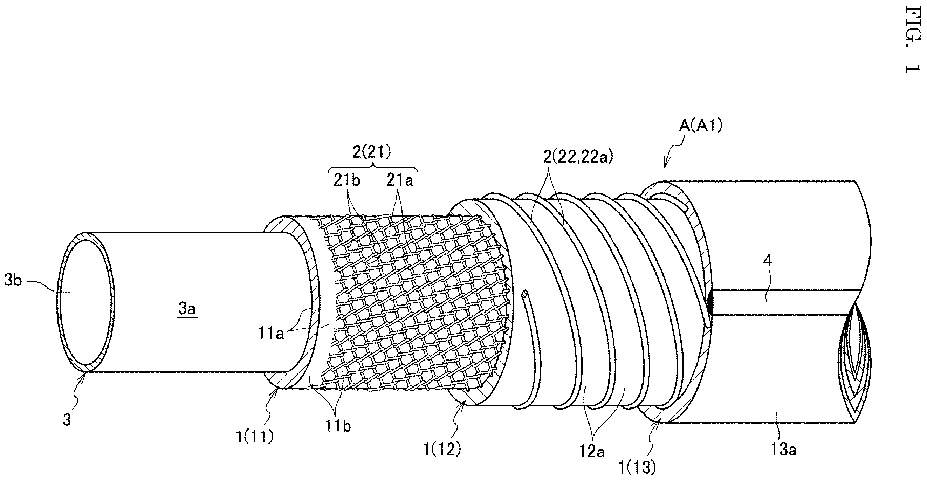

Fig. 1 is an explanatory diagram (a partially cutaway perspective view) showing an overall configuration of a heat resistant flexible hose according to an embodiment of the present invention.

### [Description of Embodiments]

Hereinafter, an embodiment of the present invention will be described in detail with reference to the figures.

A heat resistant flexible hose A according to the embodiment of the present invention is, for example, a hose or a tube having excellent flexibility used in manufacturing factories or the like for foods including beverages, cosmetics, fragrances, pharmaceuticals and others. As shown in Fig. 1, it is a laminated hose that has excellent pressure resistance by providing a reinforcing layer 2 between a plurality of heat resistant layers 1.

More specifically, the heat resistant flexible hose A according to the embodiment of the present invention includes, as main components, a plurality of heat resistant layers 1 provided at an outer side part of a hose body A1, a reinforcing layer 2 provided between the plurality of heat resistant layers 1, and a barrier layer 3 provided at an inner side part of the hose body A1.

A main component of the plurality of heat resistant layers 1 is made of heat resistant silicone rubber and formed in a tubular shape, and it is preferable to use transparent or translucent heat resistant silicone rubber so that a fluid passing through the hose body A1 can be seen from the outside.

An inner layer part 11 is provided on an inner side of the plurality of heat resistant layers 1 that faces an opposite surface 3a of the barrier layer 3, which will be described later, in a radial direction thereof.

As at least the heat resistant silicone rubber constituting the inner layer part 11, self-adhesive silicone rubber in which an adhesive component is put into a silicone rubber component, for example, by mixing silicone rubber containing an adhesive component with a solid millable silicone rubber, which have the same crosslinking structure, is preferably used. As a result, the self-adhesive silicone rubber chemically directly bonds to fluororesin without requiring primer processing.

Further, as another example, when liquid silicone rubber containing an adhesive component is used, it is possible to produce self-adhesive silicone rubber that chemically directly bonds to fluororesin without requiring primer processing.

As an example of the self-adhesive silicone rubber, it is preferable to use "ELASTOSIL (registered trademark)" manufactured by Asahi Kasei Wacker Silicone Co., Ltd.

On the other hand, for the heat resistant silicone rubber of the plurality of heat resistant layers 1 except the inner layer part 11, a general addition reaction type silicone rubber or the like is used.

In the case shown in Fig. 1, a specific example of the plurality of heat resistant layers 1 has the inner layer part 11 disposed on an outer side of the barrier layer 3, which will be described later, an intermediate layer part 12 disposed on an outer side of the inner layer part 11, and an outer layer part 13 disposed on an outer side of the intermediate layer part 12 as the outermost layer.

An outer layer surface 13a of the outer layer part 13 is partially provided with an identification part 4 having a color different from that of the outer layer part 13 so that it can be distinguished from other hoses at a glance. In the case of the illustrated example, the identification part 4 is continuously formed in a line shape extending in an axial direction of the hose body A1 on a part of the outer layer surface 13a in a circumferential direction thereof.

Further, although not shown as another example, changes such as deleting the intermediate layer part 12 to include the inner layer part 11 and the outer layer part 13, changing a shape and the number of the identification part 4 to a shape and the number other than those shown in the illustrated example, or deleting the identification part 4 may be made.

The reinforcing layer 2 improves physical properties such as pressure resistance and shape retention of the hose body A1 by winding a reinforcing wire in a net shape (braided shape) or spiral shape between the plurality of heat resistant layers 1.

Examples of the reinforcing wire of the reinforcing layer 2 include a reinforcing thread made of synthetic resin fibers such as polyester, nylon and aramid, and a hard wire.

As the reinforcing thread, there is a multifilament obtained by twisting a plurality of fine synthetic resin fibers, and the like.

Examples of the hard wire include a metal wire that is hard to rust such as stainless steel, a hard fiber such as a thick monofilament made of one synthetic resin fiber, and a resin wire made of a hard synthetic resin.

In the case shown in Fig. 1, a specific example of the reinforcing layer 2 has a first reinforcing layer 21 that is formed as a laminate between the inner layer part 11 and the intermediate layer part 12, and a second reinforcing layer 22 that is formed as a laminate between the intermediate layer part 12 and the outer layer part 13.

The first reinforcing layer 21 is formed by braiding blades 21a and 21b made of thin reinforcing threads as reinforcing wires. In the illustrated example, a knitting machine (not shown) is used to knit them in the axial direction of the hose body A1. The blade (longitudinal knitting row) 21a extending in the axial direction of the hose body A1 and the blade (horizontal knitting row) 21b intersecting it and extending in the circumferential direction of the hose body A1 are woven with each other in a stretchable manner.

The second reinforcing layer 22 is formed by guiding a coil 22a made of a metal wire such as stainless steel or a thick monofilament as the reinforcing wire from a coil molding machine (not shown) or a coil storage part (not shown) and winding it in the axial direction of the hose body A1 in a stationary state. In a case in which a monofilament is used, it is less likely to rust than a metal wire, so that the hose body A1 can be easily cut, and weight reduction can be achieved.

Further, a weaving direction of the blades 21a and 21b and a winding direction of the coil 22a are preferably disposed in opposite directions. As a result, they are configured such that drawbacks such as the blades 21a and 21b tending to expand and change in the radial direction, the coil 22a tending to twist, and the hose body A1 tending to extend in the axial direction are canceled out, and thus higher shape retention performance than expected from a combination thereof can be obtained by complementing each other.

Further, although not shown as another example, changes such as changing the arrangement of the blades 21a and 21b and the coil 22a to an arrangement other than the illustrated example, or deleting either the first reinforcing layer 21 or the second reinforcing layer 22 can be made.

The barrier layer 3 is made of fluororesin as a main component and is formed in a tubular shape as the innermost layer to come into contact with a fluid passing through the hose body A1 inside the inner layer part 11, and it is preferable to use a transparent or translucent fluororesin such that the fluid flowing along an inner surface 3b thereof can be seen from the outside.

In particular, among the fluororesins, it is preferable to use an ethylene-tetrafluoroethylene copolymer (tetrafluoroethylene-ethylene copolymer: hereinafter referred to as "ETFE") having excellent mechanical properties.

For the ETFE constituting the barrier layer 3, self-adhesive ETFE that has a low melting point of 240°C or less, and chemically directly bonds to silicone rubber without requiring primer processing by adding an adhesive component to ETFE is used. Specifically, it is preferable to use self-adhesive ETFE having a melting point of 190°C to 240°C, and particularly preferably to use self-adhesive ETFE having a melting point of 190°C or less.

As an example of the self-adhesive ETFE, it is preferable to use "Fluon (registered trademark) LM-ETFE" manufactured by AGC (former Asahi Glass) Co., Ltd., which is a thermoplastic fluororesin having an adhesive functional group added to ETFE. With the "Fluon (registered trademark) LM-ETFE," a low melting point of 180°C to 240°C can be achieved.

As a method for forming the inner layer part 11 and the barrier layer 3, the inner layer part 11 and the barrier layer 3 form a laminate by extruding molding or coating molding and are adhered by crosslinking adhesion.

In the case of extruding molding, first, self-adhesive ETFE is extruded into a tubular shape at a temperature higher than its melting point with an extruding molding machine (not shown) to produce the barrier layer 3. Next, the self-adhesive silicone rubber is extruded from another extruding mold machine (not shown) into a tubular shape at a low temperature (50°C or less) in an unvulcanized state toward the opposite surface 3a of the cooled barrier layer 3, and inner layer part 11 is produced by laminating along the opposite surface 3a of the barrier layer 3. Subsequently, by heating the inner layer part 11 to a temperature higher than the melting point of self-adhesive ETFE, an inner peripheral surface 11a of the inner layer part 11 is adhered by crosslinking adhesion to the opposite surface 3a of the barrier layer 3.

Further, in the case of coating molding, first, self-adhesive ETFE is extruded and molded with an extruding mold machine to produce the barrier layer 3 into a tubular shape. Next, self-adhesive silicone rubber made of liquid silicone rubber containing an adhesive component is applied, or the tubular barrier layer 3 is immersed in the self-adhesive silicone rubber made of a liquid silicone rubber containing an adhesive component along the opposite surface 3a of the barrier layer 3. As a result, the inner layer part 11 is covered along the opposite surface 3a of the barrier layer 3, and the barrier layer 3 and the inner layer part 11 form a laminate. Subsequently, by heating the inner layer part 11 to a temperature higher than the melting point of self-adhesive ETFE, the inner peripheral surface 11a of the inner layer part 11 is adhered by crosslinking adhesion to the opposite surface 3a of the barrier layer 3.

In particular, it is preferable that the opposite surface 3a of the barrier layer 3 in contact with the inner layer part 11 be roughened before the inner layer part 11 is laminated. As a method for roughening the opposite surface 3a of the barrier layer 3, plasma processing, corona processing, or the like can be used. However, since the opposite surface 3a of the barrier layer 3 is easily whitened in corona processing, plasma processing is preferably used to maintain transparency of the barrier layer 3.

In the case shown in Fig. 1 as a specific example of the method for manufacturing the hose body A1, self-adhesive ETFE that becomes the barrier layer 3 is formed by extruding molding, and if necessary, the opposite surface 3a of the barrier layer 3 is roughened by plasma processing or the like. After the opposite surface 3a is roughened, self-adhesive silicone rubber that becomes the inner layer part 11 is formed by extruding molding, and the opposite surface 3a of the barrier layer 3 and the inner peripheral surface 11a of the inner layer part 11 are adhered by crosslinking adhesion.

After that, the blades 21a and 21b are braided on the outer side of the inner layer part 11 along a smooth inner layer surface 11b of the inner layer part 11, and the first reinforcing layer 21 is continuously molded by winding.

On an outer side of the first reinforcing layer 21, addition reaction type silicone rubber or the like that becomes the intermediate layer part 12 is formed by extruding molding, the coil 22a is wound along a smooth intermediate layer surface 12a of the intermediate layer part 12, and the second reinforcing layer 22 is continuously formed by winding.

Addition reaction type silicone rubber or the like that becomes the outer layer part 13 is formed by extruding molding on an outer side of the second reinforcing layer 22, and the identification part 4 is formed by extruding molding in a strip shape or heat-bonded and integrated along a smooth outer layer surface 13a of the outer layer part 13.

According to the heat resistant flexible hose A according to the embodiment of the present invention, by extruding mold or coating molding the barrier layer 3 made of self-adhesive ETFE having a low melting point of 240°C or less and the inner layer part 11 of the plurality of heat resistant layers 1 made of self-adhesive silicone rubber, the inner peripheral surface 11a of the inner layer part 11 is sufficiently adhered by crosslinking adhesion to the opposite surface 3a of the barrier layer 3 even in a low heating temperature region.

For this reason, the inner layer part 11 and the barrier layer 3 are integrated with high adhesive strength.

Therefore, excellent mechanical properties that can withstand repetition of various types of cleaning, bending, and vibration are provided, so that the inner surface 3b of the barrier layer 3 can be prevented from being flavored, colored, seasoned due to changing of fluids passing through the inner hose for a long period of time.

As a result, as compared to conventional ones in which the inner side layer made of fluororesin and the outer side layer made of silicone rubber are adhered by crosslinking adhesion with a silicone rubber primer, even when various types of cleaning (hot water cleaning, steam cleaning, and chemical cleaning) are repeated due to changing of fluids passing through the inner hose, and bending and vibrations are repeated in a piping state, the adhesive strength between the inner layer part 11 and the barrier layer 3 does not decrease, and deterioration of pressure resistance and bending performance can be prevented for a long period of time, resulting in excellent durability. For this reason, it is possible to prevent flavor transfer, color transfer, and taste transfer from a fluid before cleaning to a fluid after cleaning for a long period of time. As a result, since a life span of the entire hose can be significantly extended, stable use can be achieved for a long period of time, and a decrease in operating rate due to frequent hose replacement can be prevented.

Further, as compared to conventional ones which requires a step of processing the outer side of the inner side layer with a silicone rubber primer before the step of adhering the inner side layer and the outer side layer, the barrier layer 3 and the inner layer part 11 are adhered without using a primer, and thus the process can be simplified, the structure of the manufacturing apparatus can be simplified, and the cost for the primer and the waste solvent can be eliminated, resulting in a reduction in costs.

In addition, since the self-adhesive ETFE constituting the inner layer part 11 has a low melting point of 240°C or less, the heating temperature can be inhibited in a low temperature region. As a result, the reinforcing wire (reinforcing thread made of polyester) of the reinforcing layer 2 does not thermally deteriorate due to the crosslinking adhesion and deterioration of the pressure resistance performance can be prevented.

In particular, it is preferable to roughen the opposite surface 3a of the barrier layer 3 in contact with the inner layer part 11.

In this case, while the inner layer part 11 and the barrier layer 3 are formed by extruding molding or coating molding, the opposite surface 3a of the barrier layer 3 is roughened by plasma processing or the like, and thus a surface area of the opposite surface 3a of the barrier layer 3 increases and the adhesiveness is improved.

Therefore, the adhesive strength between the barrier layer 3 and the inner layer part 11 can be further increased.

Further, it is preferable that the plurality of heat resistant layers 1, the inner layer part 11, and the barrier layer 3 be transparent.

In this case, the fluid passing through an inside of the barrier layer 3 can be seen through the plurality of transparent heat resistant layers 1, the inner layer part 11, and the barrier layer 3, from an outside of the plurality of heat resistant layers 1.

Therefore, hygiene of the fluid in the inner hose can be easily controlled visually.

Also, since the self-adhesive ETFE has a low melting point of 240°C or lower, the heating temperature can be inhibited in a low temperature region. As a result, since it is possible to the generation of air bubbles from the silicone rubber due to the crosslinking adhesion, and no bubbles remain at an interface between the inner peripheral surface 11a of the inner layer part 11 and the opposite surface 3a of the barrier layer 3, excellent transparency can be achieved and the hygiene control of the fluid in the inner hose can be reliably performed visually.

### [Examples]

Examples of the present invention will be described below.

### [Examples 1 and 2, and Comparative examples 1 and 2]

Examples 1 and 2 and Comparative Examples 1 and 2 shown in Table 1 have a four-layer structure including the barrier layer serving as the innermost layer, the inner layer part, the reinforcing layer in which reinforcing threads are braided, and the outer layer part, which are formed by using materials and forming methods described therein. In addition, evaluation samples of the same size were prepared.

In Example 1, the above-mentioned self-adhesive ETFE (a melting point 190°C) was used for the material of the barrier layer, and the above-mentioned self-adhesive silicone rubber was used for the material of the inner layer part.

In Example 2, the above-mentioned self-adhesive ETFE (a melting point of 240°C) was used for the material of the barrier layer, and the above-mentioned self-adhesive silicone rubber was used for the material of the inner layer part.

In Comparative Example 1, general ETFE (a melting point of 260°C) was used for the material of the barrier layer, and addition reaction type silicone rubber was used for the material of the inner layer part.

In Comparative Example 2, general tetrafluoroethylene-perfluoroalkyl vinyl ether copolymer resin (PFA: a melting point 310°C) was used for the material of the barrier layer, and addition reaction type silicone rubber was used for the material for the inner layer part.

In the forming methods of Examples 1 and 2, the barrier layer and the inner layer part formed a laminate by extruding molding or coating molding as described above and were adhered by crosslinking adhesion. Comparing the evaluation samples formed by extruding molding and the evaluation samples formed by coating molding, the barrier layer and the inner layer part were similarly adhered by crosslinking adhesion in both evaluation samples, and thus, in Table 1, it is shown as "extruding molding (coating molding)."

In the forming methods of Comparative Example 1 and Comparative Example 2, the opposite surface (outer surface) of the barrier layer was processed with the silicone rubber primer and then adhered by crosslinking adhesion to the inner layer part in the same manner as in Japanese Patent Application Laid-Open No. 2001-012659.

In the forming methods of the reinforcing layer and the outer layer part in Example 1, Example 2, Comparative Example 1, and Comparative Example 2, the polyester yarn is braided and then the addition reaction type silicone rubber is formed by extruding molding as described above, thereby forming a common structure.

### [Evaluation criterion]

The "hydraulic pressure resistance test (burst pressure)," "bending test (delamination)," "bending test (incision)," "steam continuous flow test," "flavoring/coloring/seasoning test," and "comprehensive evaluation" of the results of evaluation shown in Table 1 are based on the following indexes.

The "hydraulic pressure resistance test (burst pressure)" is a test for measuring a water pressure when each evaluation sample bursts by connecting Example 1, Example 2, Comparative Example 1, and Comparative Example 2 to a hydraulic pressure resistance tester and applying a water pressure that is a multiple of a normal pressure (a water temperature of 23°C and 0.5 MPa) to each evaluation sample for a certain period of time (three minutes). The test results were evaluated on a three-point scale.

In the result of evaluation of the "hydraulic pressure resistance test (burst pressure),"evaluation was made as ⊚: no burst even at five times or more of the normal pressure, o: burst at twice the normal pressure, and ×: burst at the normal pressure(1 times).

The "bending test (delamination)" is a test for confirming whether or not delamination occurs between the barrier layer and the inner layer part by performing a continuous bending test with metal fittings using Example 1, Example 2, Comparative Example 1, and Comparative Example 2. The test results were evaluated on a two-point scale.

In the result of evaluation of the "bending test (delamination)," evaluation was made as o: no delamination occurred, and ×: delamination occurred.

The "bending test (incision)" is a test for confirming whether or not an incision occurs in any of the barrier layer, the inner layer part, and the outer layer part by performing a continuous bending test with metal fittings using Example 1, Example 2, Comparative Example 1, and Comparative Example 2. The test results were evaluated on a two-point scale.

In the result of evaluation of the "bending test (delamination)," evaluation was made as o: no incision, and ×: incision occurred.

The continuous bending test with metal fittings is a test for comparing bending performance and pressure resistance performance of each evaluation sample. In more detail, a metal fitting (pressure proof nipple) is inserted into one end opening of each evaluation sample and closed, the other end opening of each evaluation sample is closed, and supported substantially vertically in a state in which a load (2 kg) is attached thereto. Each evaluation sample is intermittently supplied with air of a predetermined pressure thereinto to generate an air hammer state, and swung by bending the metal fitting (pressure proof nipple) side from the vertical state at regular time intervals by about 90 degrees in a lateral direction repeatedly (20,000 times), and thus a state change of each evaluation sample was observed.

The "steam continuous flow test" is a test for confirming whether or not delamination occurs between the barrier layer and the inner layer part after connecting Example 1, Example 2, Comparative Example 1, and Comparative Example 2 to a steam apparatus and then flowing steam (130°C) for a certain period of time (30 consecutive days). The test results were evaluated on a three-point scale.

In the results of evaluation of the "steam continuous flow test," evaluation was made as o: no delamination occurred, △: delamination occurred partially, and ×: delamination occurred entirely.

The "flavoring/coloring/seasoning test" is a test for confirming whether or not the flavor, color and taste of chili oil remain on the inner surface of the barrier layer of each evaluation sample by filling each evaluation sample with chili oil and leaving it in a room at 23°C for 24 hours, and then performing steam cleaning continuously for 24 hours. The test results were evaluated on a three-point scale by 15 panelists by comparing them with blanks and performing 3-point identification.

In the result of evaluation of the "flavoring/coloring/seasoning test," evaluation was made as o: no flavor, color, or taste remains, △: any of flavor, color, and taste remains slightly, and ×: any or all of flavor, color, and taste remains.

The "comprehensive evaluation" was evaluated comprehensively on a three-point scale on the basis of the results of evaluation of the above-mentioned "hydraulic pressure resistance test (burst pressure)," "bending test (delamination)," "bending test (incision)," "steam continuous flow test," and "flavoring/coloring/seasoning test."

In the result of evaluation of the "comprehensive evaluation," evaluation was made as ⊚: best, o: good, and ×: unsuitable.

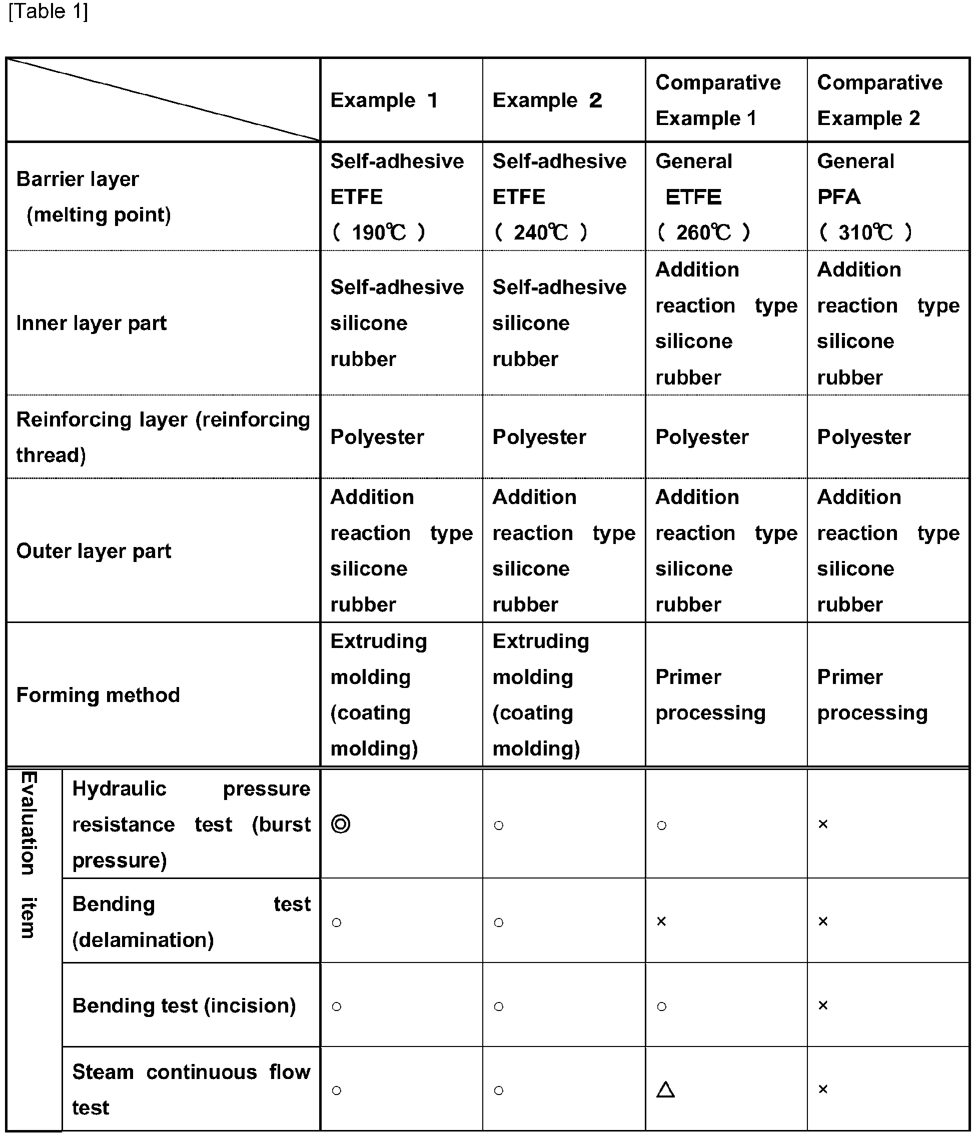

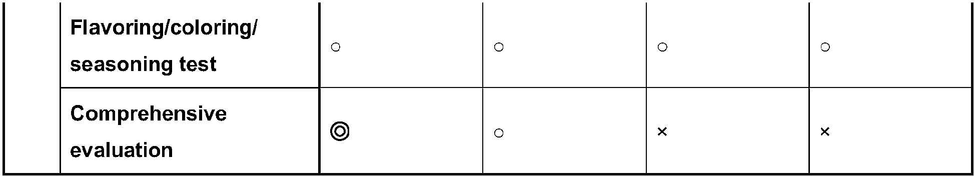

### [Results of evaluation]

Comparing Example 1 and Example 2 with Comparative Example 1 and Comparative Example 2, Example 1 and Example 2 obtained good results of evaluation in terms of all "hydraulic pressure resistance test (burst pressure)," "bending test (delamination)," "bending test (incision)," "steam continuous flow test," "flavoring/coloring/seasoning test," and "comprehensive evaluation."

As is clear from the results of evaluation, it was proved that Example 1 and Example 2 are heat resistant flexible hoses A having excellent mechanical properties (pressure resistance, bending performance, and pressure resistance) and functions of preventing the inner surface of the barrier layer from being flavored, colored, and seasoned.

In particular, in Example 1, the melting point of the self-adhesive ETFE is 190°C, which is lower than the melting point of the self-adhesive ETFE used in Example 2 (240°C), and thus the highest evaluation result is obtained in the "hydraulic pressure resistance test (burst pressure)." From this result of evaluation, it can be inferred that if self-adhesive ETFE having a melting point lower than 190°C is used, the result of evaluation in the "hydraulic pressure resistance test (burst pressure)" can be further improved.

On the other hand, Comparative Example 1 and Comparative Example 2 have poor results of evaluation in any of "hydraulic pressure resistance test (burst pressure)," "bending test (delamination)," "bending test (incision)," and "steam continuous flow test."

More specifically, Comparative Example 1 had a poor result of evaluation in "bending test (delamination)" since delamination occurred at a bent part near the metal fitting (pressure proof nipple) at the interface between the barrier layer and the inner layer part of the evaluation sample in the continuous bending test with metal fittings. In "steam continuous flow test," a part of the evaluation sample was delaminated, resulting in a poor result of evaluation.

Comparative Example 2 had a poor result of evaluation in "hydraulic pressure resistance test (burst pressure)" since the evaluation sample was burst at the normal pressure (a water temperature of 23°C and 0.5 MPa) for three minutes. In the continuous bending test with metal fittings, similarly to Comparative Example 1, delamination occurred at the bent part near the metal fitting (pressure proof nipple) at the interface between the barrier layer and the inner layer part of the evaluation sample, and incision occurred in the bent part near the metal fitting (pressure resistant nipple) in the barrier layer of the evaluation sample. For this reason, poor evaluation results were obtained in "bending test (delamination)" and "bending test (incision)." In "Steam continuous flow test," delamination occurred in the entire evaluation sample, resulting in a poor result of evaluation.

Also, in the illustrated example of the above-described embodiment, the first reinforcing layer 21 is provided between the inner layer part 11 and the intermediate layer part 12, and the second reinforcing layer 22 is provided between the intermediate layer part 12 and the outer layer part 13, but the present invention is not limited thereto and may be configured such that the intermediate layer part 12 and the second reinforcing layer 22 are omitted, and the outer layer part 13 is directly laminated on the outer side of the first reinforcing layer 21.

Further, the present invention may be configured such that the first reinforcing layer 21 and the intermediate layer part 12 are omitted, and the second reinforcing layer 22 and the outer layer part 13 are directly laminated on the outer side of the inner layer part 11.

Also in this case, the same operations and advantages as those shown in the illustrated example can be obtained.

### [Reference signs list]

- A: Heat resistant flexible hose
- 1: Heat resistant layer
- 11: Inner layer part
- 2: Reinforcing layer
- 21a, 21b: Reinforcing wire(blade)
- 22a: Reinforcing wire(coil)
- 3: Barrier layer
- 3a: Opposite surface

## Claims

1. A heat resistant flexible hose (A) comprising:
a plurality of heat resistant layers (1) formed of silicone rubber as a main component;
a reinforcing layer (2) provided by winding a reinforcing wire (21a, 21b, 22a) between the plurality of heat resistant layers (1); and
a barrier layer (3) which is radially opposed to an inner layer part (11) of the plurality of heat resistant layers (1) made of heat resistant silicone rubber and is provided in contact with a fluid passing through an inner hose,
wherein the barrier layer (3) uses a self-adhesive ethylene-tetrafluoroethylene copolymer having a melting point of 240°C or less and imparting an adhesive functional group, and forms a laminate with the inner layer part (11) by extruding molding or coating molding,
a first reinforcing layer (21) is in contact with the inner layer part (11) which serves as the reinforcing layer (2), and is wound by reinforcing thread made of synthetic resin as the reinforcing wire (21a, 21b), and
the inner layer part (11) uses a self-adhesive silicone rubber in which an adhesive component is contained in a silicone rubber component and forms a laminate along the opposite surface (3a) of the barrier layer (3) by extruding molding or coating molding, and has inner peripheral surface (11a) adheres thereto by crosslinking adhesion as the opposite surface (3a) of the barrier layer (3) by heating at a temperature higher than the melting point of the self-adhesive ethylene tetrafluoride copolymer.

2. The heat resistant flexible hose (A) according to claim 1, wherein an opposite surface (3a) of the barrier layer (3) in contact with the inner layer part (11) is roughened.

3. The heat resistant flexible hose (A) according to claim 1 or 2, wherein the plurality of heat resistant layers (1), the inner layer part (11), and the barrier layer (3) are transparent.

4. A method for producing a heat resistant flexible hose (A), said method comprising:
a first step of forming a tubular barrier layer by extruding molding or coating molding self-adhesive ethylene-tetrafluoroethylene copolymer having a melting point of 240°C or less and imparting adhesive functional group,
a second step of extruding molding or coating molding a self-adhesive silicone rubber in which an adhesive component is contained in a silicone rubber component in an unvulcanized state toward opposite surface (3a) of the barrier layer (3), and an inner layer part (11) forms laminate along with the opposite surface (3a) of the barrier layer (3),
a third step of heating the inner layer part (11) to a temperature higher than the melting point of the self-adhesive ethylene-tetrafluoroethylene copolymer to crosslink and adhere the inner peripheral surface (11a) of the inner layer part (11) with the opposite surface (3a) of the barrier layer (3),
a fourth step of winding a reinforcing thread made of synthetic resin around the outside of the inner layer part (11) as a reinforcing wire (21a, 21b) to form a first reinforcing layer (21), and
a fifth step of laminating an addition reaction type silicone rubber on the outside of the first reinforcing layer (21) to form a heat-resistant layer (1).

## Patentansprüche

1. Hitzebeständiger flexibler Schlauch (A), umfassend:
eine Vielzahl von hitzebeständigen Schichten (1), die aus Silikonkautschuk als Hauptbestandteil gebildet sind;
eine Verstärkungsschicht (2), die durch Aufwickeln eines Verstärkungsdrahtes (21a, 21b, 22a) zwischen der Vielzahl von hitzebeständigen Schichten (1) bereitgestellt wird; und
eine Sperrschicht (3), die einem Innenschichtteil (11) der Vielzahl von hitzebeständigen Schichten (1) aus hitzebeständigem Silikonkautschuk radial gegenüberliegt und in Kontakt mit einem durch einen inneren Schlauch strömenden Fluid bereitgestellt wird,
wobei die Sperrschicht (3) ein selbstklebendes Ethylen-Tetrafluorethylen-Copolymer mit einem Schmelzpunkt von 240 °C oder weniger verwendet, das eine klebende funktionelle Gruppe aufweist, und mit dem Innenschichtteil (11) durch Extrusionsformen oder Beschichtungsformen ein Laminat bildet,
eine erste Verstärkungsschicht (21) mit dem als Verstärkungsschicht (2) dienenden Innenschichtteil (11) in Kontakt steht und mit einem Verstärkungs-Thread aus Kunstharz als Verstärkungsdraht (21a, 21b) aufgewickelt ist, und
der Innenschichtteil (11) einen selbstklebenden Silikongummi verwendet, in dem eine Klebstoffkomponente in einer Silikongummikomponente enthalten ist und ein Laminat entlang der gegenüberliegenden Oberfläche (3a) der Sperrschicht (3) durch Extrusionsformen oder Beschichtungsformen bildet, und eine innere Umfangsfläche (11a) aufweist, die daran durch Vernetzungshaftung als die gegenüberliegende Oberfläche (3a) der Sperrschicht (3) durch Erhitzen auf eine Temperatur, die höher als der Schmelzpunkt des selbstklebenden Ethylen-Tetrafluorid-Copolymers ist, haftet.

2. Hitzebeständiger flexibler Schlauch (A) nach Anspruch 1, wobei eine gegenüberliegende Oberfläche (3a) der Sperrschicht (3), die mit dem Innenschichtteil (11) in Kontakt steht, aufgeraut ist.

3. Hitzebeständiger flexibler Schlauch (A) nach Anspruch 1 oder 2, wobei die mehreren hitzebeständigen Schichten (1), der Innenschichtteil (11) und die Sperrschicht (3) transparent sind.

4. Verfahren zur Herstellung eines hitzebeständigen flexiblen Schlauchs (A), wobei das Verfahren umfasst:
einen ersten Schritt des Bildens einer röhrenförmigen Sperrschicht durch Extrusionsformen oder Beschichtungsformen von selbstklebendem Ethylen-Tetrafluorethylen-Copolymer mit einem Schmelzpunkt von 240 °C oder weniger und Aufbringen einer klebenden funktionellen Gruppe,
einen zweiten Schritt des Extrusionsformen oder Beschichtungsformens eines selbstklebenden Silikongummis, bei dem eine Klebstoffkomponente in einer Silikongummikomponente in einem unvulkanisierten Zustand zur gegenüberliegenden Oberfläche (3a) der Sperrschicht (3) hin enthalten ist und ein Innenschichtteil (11) zusammen mit der gegenüberliegenden Oberfläche (3a) der Sperrschicht (3) ein Laminat bildet,
einen dritten Schritt des Erhitzens des Innenschichtteils (11) auf eine Temperatur, die höher ist als der Schmelzpunkt des selbstklebenden Ethylen-Tetrafluorethylen-Copolymers, um die innere Umfangsfläche (11a) des Innenschichtteils (11) mit der gegenüberliegenden Oberfläche (3a) der Sperrschicht (3) zu vernetzen und zu verkleben,
einen vierten Schritt des Aufwickelns eines Verstärkungs-Threads aus Kunstharz um die Außenseite des Innenschichtteils (11) als Verstärkungsdraht (21a, 21b), um eine erste Verstärkungsschicht (21) zu bilden, und
einen fünften Schritt des Laminierens eines Silikonkautschuks vom Additionsreaktionstyp auf die Außenseite der ersten Verstärkungsschicht (21), um eine hitzebeständige Schicht (1) zu bilden.

## Revendications

1. Tuyau flexible résistant à la chaleur (A) comprenant :
une pluralité de couches résistant à la chaleur (1) formées de caoutchouc de silicone en tant que constituant principal ;
une couche de renforcement (2) ménagée par enroulement d'un treillis de renforcement (21a, 21b, 22a) entre la pluralité de couches résistant à la chaleur (1) ; et
une couche barrière (3) qui est radialement opposée à une partie couche interne (11) de la pluralité de couches résistant à la chaleur (1) constituée de caoutchouc de silicone résistant à la chaleur et est ménagée en contact avec un fluide traversant un tuyau interne,
dans lequel la couche barrière (3) utilise un copolymère éthylène-tétrafluoroéthylène auto-adhésif ayant un point de fusion de 240 °C ou moins et apportant un groupe fonctionnel adhésif, et forme un stratifié avec la partie couche interne (11) par moulage par extrusion ou moulage par enduction,
une première couche de renforcement (21) est en contact avec la partie couche interne (11) qui sert de couche de renforcement (2), et est enroulée par un fil de renforcement constitué de résine synthétique en tant que treillis de renforcement (21a, 21b), et
la partie couche interne (11) utilise un caoutchouc de silicone auto-adhésif dans lequel un constituant adhésif est contenu dans un constituant de caoutchouc de silicone et forme un stratifié le long de la surface opposée (3a) de la couche barrière (3) par moulage par extrusion ou moulage par enduction, et possède une surface périphérique interne (11a) qui adhère à celle-ci par adhérence par réticulation en tant que surface opposée (3a) de la couche barrière (3) par chauffage à une température supérieure au point de fusion du copolymère éthylène-tétrafluorure auto-adhésif

2. Tuyau flexible résistant à la chaleur (A) selon la revendication 1, dans lequel une surface opposée (3a) de la couche barrière (3) en contact avec la partie couche interne (11) est rendue rugueuse.

3. Tuyau flexible résistant à la chaleur (A) selon la revendication 1 ou 2, dans lequel la pluralité de couches résistant à la chaleur (1), la partie couche interne (11) et la couche barrière (3) sont transparentes.

4. Procédé pour la production d'un tuyau flexible résistant à la chaleur (A), ledit procédé comprenant :
une première étape de formation d'une couche barrière tubulaire par moulage par extrusion ou moulage par enduction d'un copolymère éthylène-tétrafluoroéthylène auto-adhésif ayant un point de fusion de 240 °C ou moins et apportant un groupe fonctionnel adhésif,
une deuxième étape de moulage par extrusion ou de moulage par enduction d'un caoutchouc de silicone auto-adhésif dans lequel un constituant adhésif est contenu dans un constituant de caoutchouc de silicone dans un état non vulcanisé vers une surface opposée (3a) de la couche barrière (3), et une partie couche interne (11) forme un stratifié conjointement avec la surface opposée (3a) de la couche barrière (3),
une troisième étape de chauffage de la partie de la couche interne (11) jusqu'à une température supérieure au point de fusion du copolymère éthylène-tétrafluoroéthylène auto-adhésif pour réticuler et faire adhérer la surface périphérique interne (11a) de la partie couche interne (11) avec la surface opposée (3a) de la couche barrière (3),
une quatrième étape d'enroulement d'un fil de renforcement constitué de résine synthétique autour de l'extérieur de la partie couche interne (11) en tant que treillis de renforcement (21a, 21b) pour former une première couche de renforcement (21), et
une cinquième étape de stratification d'un caoutchouc de silicone de type à réaction d'addition sur l'extérieur de la première couche de renforcement (21) pour former une couche résistant à la chaleur (1).
